## Europäisches Patentamt

## European Patent Office

## Office européen des brevets

(19)

(11) Veröffentlichungsnummer: **0 254 160**
**B1**

(12)

# EUROPÄISCHE PATENTSCHRIFT

(45) Veröffentlichungstag der Patentschrift:
**10.10.90**

(51) Int. Cl.⁵: **G01F 1/88**, G01F 1/86,
G01F 1/44

(21) Anmeldenummer: **87110001.2**

(22) Anmeldetag: **10.07.87**

(54) **Einrichtung zum Messen des Massenstromes in einem Rohr.**

(30) Priorität: **23.07.86 DE 3624884**

(43) Veröffentlichungstag der Anmeldung:
**27.01.88 Patentblatt 88/4**

(45) Bekanntmachung des Hinweises auf die Patenterteilung:
**10.10.90 Patentblatt 90/41**

(84) Benannte Vertragsstaaten:
**DE FR GB**

(56) Entgegenhaltungen:
**GB-A- 828 730**
**US-A- 2 953 681**
**US-A- 3 693 435**
**US-A- 4 075 680**

*"Enzyklopädie Naturwissenschaft und Technik"*, Verlag
Moderne Industrie, 1981, Seite 4799 .

(73) Patentinhaber: **Siemens Aktiengesellschaft,
Wittelsbacherplatz 2, D-8000 München 2(DE)**

(72) Erfinder: **Kefer, Volker, Dipl.-Ing., Oppelner Strasse 7,
D-8520 Erlangen(DE)**
Erfinder: **Krätzer, Werner, Dipl.-Ing., Auf der Höhe 33,
D-8551 Röttenbach(DE)**
Erfinder: **Reitbacher, Franz, Cand.-Ing., Mittenhofer
Strasse 12, D-8000 München 21(DE)**

## Beschreibung

Die Erfindung betrifft eine Einrichtung zum Messen des Massenstromes eines strömenden Mediums, das insbesondere aus mehr als einer Komponente oder Phase besteht, in einem Rohr, wobei im Rohr ein Drosselgerät, insbesondere ein Venturirohr oder eine Venturidüse mit dem ein Differenzdruckmesser in Verbindung steht, eingefügt ist, wobei im strömenden Medium eine Meßeinrichtung zum Bestimmen der Dichte des Mediums angeordnet ist und wobei der Differenzdruckmesser und die Meßeinrichtung zum Bestimmen der Dichte des Mediums mit einer Auswerteeinheit zum Bestimmen des Massenstromes auf bekannte Weise aus Differenzdruck und Mediumdichte verbunden sind.

Eine genaue Kenntnis des Massenstromes in einem Rohr ist in unterschiedlichen technischen Bereichen notwendig. Meßgeräte für den Massenstrom dienen beispielsweise zum Abmessen einer Flüssigkeitsmenge oder einer Gasmenge. Sie werden zu diesem Zweck in der Erdölindustrie, in der Verfahrenstechnik, in der Lebensmittelindustrie und in anderen Industriezweigen eingesetzt. In der Verfahrenstechnik ist der Massenstrom eine Meßgröße, die für die Überwachung strömender Medien in Rohrleitungssystemen von Bedeutung ist. Beispielsweise werden Massenstrommesser in Kühlkreisläufen von Kraftwerken und in Dampfverteilungssystemen eingesetzt. Durch eine ständige Überwachung des Massenstromes in einem Rohr erhält man Kenntnisse über die Energieabfuhr im Kühlkreislauf oder über die Energieverteilung in Dampfverteilungssystemen.

Eine Einrichtung zum Messen des Massenstromes ist aus "Enzyklopädie Naturwissenschaft und Technik, Verlag Moderne Industrie, 1981, Seite 4799" bekannt. Eine solche Einrichtung weist ein Venturirohr auf, das im Rohr eingefügt ist.

Der Querschnitt des bekannten Venturirohres nimmt in Strömungsrichtung zunächst ab, bleibt dann für eine bestimmte Strecke gleich und nimmt anschließend wieder zu. Zwischen dem Eintrittsquerschnitt des Venturirohres und dem Abschnitt mit kleinem Durchmesser, dem Hals des Venturirohres, ist ein Differenzdruckmesser angeordnet. Der dort bestimmte Differenzdruck ist proportional zum Quadrat des Massenstromes. Er ist aber auch umgekehrt proportional zur mittleren Dichte des Mediums im Meßbereich.

$$\Delta p = K \cdot M^2 / \rho$$

Dabei ist $\Delta p$ der Differenzdruck, M ist der Massenstrom, $\rho$ ist die mittlere Dichte des Mediums und K ist eine Proportionalitätskonstante, die durch Kalibriermessungen zu bestimmen ist. Allein aus der Differenzdruckmessung ist der Massenstrom nur zu bestimmen, falls die mittlere Dichte des strömenden Mediums bekannt ist, wie beispielsweise bei Wasser. Um die Dichte bei Mehrphasen- oder Mehrkomponentenströmungen zu bestimmen, ist es üblich, im strömenden Medium eine Meßeinrichtung zum Bestimmen der Dichte des Mediums anzuordnen.

Eine geeignete Meßeinrichtung ist beispielsweise der in der US-PS 4 075 680 beschriebene Dichtemesser. Die Meßsignale der Meßeinrichtung zum Bestimmen der Dichte des Mediums und die Meßsignale des Differenzdruckmessers werden einer Auswerteeinheit zugeführt, in der daraus ständig der Massenstrom bestimmt wird.

Bekannte Einrichtungen zum Messen des Massenstromes in einem Rohr versagen, falls die Strömung im Rohr stark inhomogen ist, da dann die Mediumdichte im Rohr sehr starke lokale Unterschiede aufweist. In technischen Anlagen werden oft inhomogene Mischungen aus Flüssigkeiten und Gasen, beispielsweise Wasser-Dampf-Gemische in Rohrleitungen befördert. Auch inhomogene Mischungen verschiedener Substanzen, wie Öl und Wasser, werden beispielsweise bei der Erdölförderung durch Rohre geleitet. Die Durchmischung von beispielsweise Wasser und Dampf oder Wasser und Öl ist dabei in der Rohrleitung oftmals so schlecht, daß die gemessenen Werte zeitabhängig zwischen den Extremwerten, den Dichten von Wasser und Dampf bzw. Wasser und Öl schwanken.

Da die Dichte eines inhomogenen Mediums mit bekannten Einrichtungen nur unzureichend zu bestimmen ist, ist folglich wegen der physikalischen Verknüpfung von Massenstrom und Dichte die Messung des Massenstromes eines inhomogenen Mediums in einem Rohr mit einem nicht tolerierbaren Fehler behaftet.

Der Erfindung liegt die Aufgabe zugrunde, eine Einrichtung zum Messen des Massenstromes zu entwickeln, die in einem Rohr angeordnet selbst bei inhomogenen strömenden Medien mit unbekannter Dichte exakte Werte für den Massenstrom liefert. Die Einrichtung soll den Massenstrom einer Mischung aus mehreren Phasen, wie Wasser und Dampf aus mehreren Komponenten, wie Wasser und Öl oder einer anderen inhomogenen Mischung bestimmen.

Die Aufgabe wird erfindungsgemäß dadurch gelöst, daß die Meßeinrichtung zum Bestimmen der Dichte des Mediums im oder am Drosselgerät im Abschnitt mit gegenüber dem Rohr gleichbleibend kleinerem Querschnitt angeordnet ist.

Bedingt durch den Aufbau des Drosselgerätes, das z.B. ein Venturirohr ist, erfolgt in dem Abschnitt, in dem der Querschnitt des Drosselgerätes in Strömungsrichtung abnimmt, eine Verwirbelung des strömenden Mediums. Diese Verwirbelung ist, wie Versuche gezeigt haben, so groß, daß im Abschnitt mit gleichbleibend kleinem Querschnitt im Drosselgerät in den meisten Fällen eine homogene Strömung vorhanden ist. Eine Homogenisierung wird selbst dann erreicht, falls vor dem Drosselgerät beispielsweise zwei Flüssigkeiten mit unterschiedlicher Dichte und eindeutiger Trennfläche übereinander geschichtet strömen. Dadurch, daß erfindungsgemäß die Meßeinrichtung zum Bestimmen der Dichte des Mediums im verengten Abschnitt, dem Hals des Drosselgerätes und damit in der stets homogenen Strömung angeordnet ist, erhält man genaue Meßwerte für die Dichte des Mediums, die dann zusammen mit den Differenzdruckwerten genaue Massenstromwerte ergeben.

Mit der Erfindung wird der Vorteil erzielt, daß der Massenstrom einer inhomogenen Mehrkomponenten- oder Mehrphasenströmung mit großer Genauigkeit und hoher Reproduzierbarkeit zu bestimmen ist. Die Auswertung der Meßwerte in der Auswerteeinheit erfolgt wegen der hohen Homogenität der Strömung nach einem besonders einfachen Modell. Darüber hinaus ist durch die erfindungsgemäße Anordnung der Meßeinrichtung zum Bestimmen der Dichte des Mediums eine kompakte Bauform der gesamten Einrichtung gegeben. Da die Meßeinrichtung im Drosselgerät, z.B. im Venturirohr, integriert ist, ist stets nur ein Bauteil in eine Rohrleitung einzufügen. Daher ist die erfindungsgemäße Einrichtung zum Messen des Massenstromes für den Anwender leicht handhabbar. Zudem ist die Meßeinrichtung als Gesamtheit leicht und exakt zu kalibrieren.

Die Meßeinrichtung zum Bestimmen der Dichte des Mediums ist beispielsweise ein Gamma-Densitometer oder eine Kapazitätssonde. Im letzteren Fall ist im Hals des Drosselgerätes in der Regel ein Kondensator angeordnet. Die Kapazität des Kondensators hängt vom Dielektrikum ab. Daher gibt bei bekannter stofflicher Zusammensetzung des strömenden Mediums eine einfache Kapazitätsmessung am Kondensator Aufschluß über die Dichte des Mediums im Kondensator. Mit dem Kondensator ist die Dichte des im Hals des Drosselgerätes homogen strömenden Mediums auf einfache Weise zuverlässig zu bestimmen.

Der Kondensator ist beispielsweise mit einem isolierenden Stoff beschichtet. Dadurch ist die erfindungsgemäße Einrichtung auch bei elektrisch leitenden strömenden Medien einsetzbar. Durch die Beschichtung ist ein Kurzschluß im Kondensator ausgeschlossen. Außerdem ist der Kondensator durch die Beschichtung vor korrodierenden Medien geschützt. Mit einem beschichteten Kondensator ist die erfindungsgemäße Einrichtung selbst für Medien mit hoher elektrischer Leitfähigkeit oder mit korrodierenden Eigenschaften zu verwenden.

Mit der Erfindung wird ein leicht handhabbares, kompaktes Massenstrommeßgerät zur Verfügung gestellt, das bei inhomogenen Strömungen zuverlässige Meßwerte liefert. Das Gerät ist insbesondere in Wasser-Dampf- und in Wasser-Öl-Gemischen, aber auch in anderen Mehrkomponenten- oder Mehrphasenströmungen vorteilhaft einsetzbar.

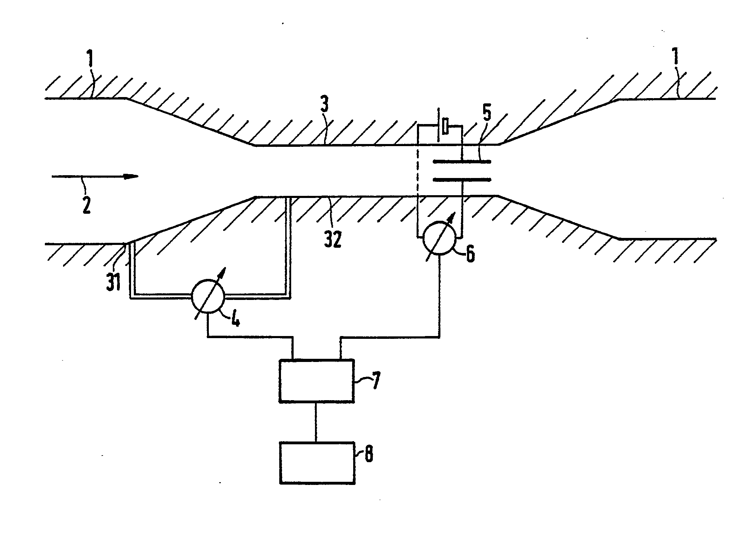

Die Erfindung wird anhand der Zeichnung näher erläutert:

Die Zeichnung zeigt eine Einrichtung zum Messen des Massenstromes eines inhomogenen strömenden Mediums in einem Rohr.

Ein Rohr 1 wird in Richtung eines Pfeiles 2 von einem inhomogenen Medium durchströmt. Im Rohr 1 soll der Massenstrom M, also diejenige Masse, die in einer Zeiteinheit einen Einheitsquerschnitt durchströmt, bestimmt werden. Dazu ist als Drosselgerät ein Venturirohr 3 im Rohr 1 eingefügt. Mit dem Venturirohr 3 steht zwischen dessen Eingang 31 in Strömungsrichtung und dem verengten Hals 32 ein Differenzdruckmesser 4 in Verbindung. Der dort gemessene Differenzdruck $\Delta p$ ist proportional zum Quadrat des gesuchten Massenstromes M. In die Beziehung zwischen Massenstrom M und Differenzdruck $\Delta p$ geht die Dichte $\rho$ des strömenden Mediums ein. In der inhomogenen Strömung im Rohr 1 ist die Dichte $\rho$ des Mediums starken lokalen Schwankungen unterworfen, so daß eine korrekte Dichtemessung dort nicht möglich ist. In der in Strömungsrichtung ersten Hälfte des Venturirohres 3 wird das Medium beschleunigt und es bildet sich eine homogene Strömung aus. Das geschieht selbst dann, falls im Rohr 1 vor dem Venturirohr 3 zwei Komponenten geschichtet strömen. Hinter dem Venturirohr 3 ist dann ein Abbau der homogenen Strömung bis hin zu einer erneuten geschichteten Strömung möglich. Erfindungsgemäß ist eine Meßeinrichtung zum Bestimmen der Dichte $\rho$ des strömenden Mediums im Bereich der homogenen Strömung, also in der zweiten Hälfte des Halses 32 des Venturirohres 3 angeordnet. Die dort gemessene Dichte $\rho$ ist, wie Versuche ergaben, selbst bei inhomogener Strömung im Rohr 1 weitgehend konstant. Die Einrichtung zum Messen der Dichte $\rho$ ist ein Kondensator 5, der mit einem Kapazitätsmeßgerät 6 verbunden ist.

Der Kondensator 5 wird im Hals 32 des Venturirohres 3 vom dort homogen strömenden Medium durchflossen. Mit der Dichte $\rho$ variiert die Dielektrizitätskonstante des Mediums und folglich auch die Kapazität des Kondensators 5. Daher ist die durch das Kapazitätmeßgerät 6 gemessene Kapazität ein Maß für die Dichte $\rho$ des im Kondensator 5 homogen strömenden Mediums. Der Differenzdruckmesser 4 und das Kapazitätmeßgerät 6 sind mit einer Auswerteeinheit 7 verbunden, die mit einem Anzeigegerät 8 gekoppelt ist. In der Auswerteeinheit 7 wird mit dem bekannten funktionellen Zusammenhang aus dem Differenzdruck $\Delta p$ und der Dichte $\rho$ des Mediums, die sich aus der Kapazität des Kondensators 5 ergibt, der Massenstrom M im Rohr 1 bestimmt. Das Venturirohr 3, der Kondensator 5 zum Bestimmen der Dichte $\rho$, sowie Differenzdruckmesser 4, Kapazitätmeßgerät 6, Auswerteeinheit 7 und Anzeigegerät 8 sind in einer kompakten Baueinheit zusammengefaßt, die leicht handhabbar und auf einfache Weise einzubauen ist. Durch die erfindungsgemäße Anordnung des Kondensators 5 in der in Strömungsrichtung hinteren Hälfte des Halses 32 des Venturirohres 3 ist der Massenstrom M eines vor dem Venturirohr 3 im Rohr 1 strömenden inhomogenen Mediums genau und zuverlässig bestimmbar.

## Patentansprüche

1. Einrichtung zum Messen des Massenstromes (M) eines strömenden Mediums, das insbesondere aus mehr als einer Komponente oder Phase besteht, in einem Rohr (1),
wobei im Rohr (1) ein Drosselgerät, insbesondere ein Venturirohr (3) oder eine Venturidüse, mit dem ein Differenzdruckmesser (4) in Verbindung steht, eingefügt ist,
wobei im strömenden Medium eine Meßeinrichtung zum-Bestimmen der Dichte (ρ) des Mediums ange-ordnet ist und
wobei der Differenzdruckmesser (4) und die Meßeinrichtung zum Bestimmen der Dichte (ρ) des Medi-ums mit einer Auswerteeinheit (7) zum Bestimmen des Massenstromes(M)auf bekannte Weise aus Differenzdruck (Δp) und Mediumdichte (ρ) verbun-den sind, dadurch gekennzeichnet, daß die Meßeinrichtung zum Bestimmen der Dichte (ρ) des Mediums im oder am Drosselgerät im Abschnitt mit gegenüber dem Rohr (1) gleichbleibend kleinerem Querschnitt angeordnet ist.

2. Einrichtung nach Anspruch 1,dadurch gekennzeichnet, daß die Meßeinrichtung zum Bestimmen der Dichte (ρ) des Mediums ein Kondensator (5) ist, der mit einem Kapazitätmeßgerät (6) verbunden ist.

3. Einrichtung nach Anspruch 2, dadurch gekennzeichnet, daß der Kondensator (5) mit einem isolierenden Stoff beschichtet ist.

**Claims**

1. Device for measuring flow rate (M) of a flowing medium, in particular one comprising more than one component or phase, in a pipe (1),
wherein in the pipe (1) there is inserted a throttling device, especially a Venturi tube (3) or a Venturi nozzle, to which a pressure differential meter (4) is connected,
wherein a measuring device for determining the den-sity (ρ) of the medium is arranged in the flowing medium and
wherein the pressure differential meter (4) and the measuring device for determining the density (ρ) of the medium are connected to an evaluation unit (7) for determining in known manner the flow rate (M) from the pressure difference (Δp) and the density (ρ) of the medium, characterised in that the measuring device for determining the density (ρ) of the me-dium is arranged in or on the throttling device at a section having a cross section which is uniformly smaller with respect to the pipe (1).

2. Device according to claim 1, characterised in that the measuring device for determining the densi-ty (ρ) of the medium is a capacitor (5) which is connected to a capacitance measuring device (6).

3. Device according to claim 2, characterised in that the capacitor (5) is coated with an insulating material.

**Revendications**

1. Dispositif pour mesurer le débit massique (M) d'un milieu en écoulement, constitué notamment par plus d'un constituant ou d'une phase, dans un tube (1), et dans lequel un dispositif d'étranglement, notamment un tube à venturi (3) ou une buse de venturi, auquel ou à laquelle est relié un manomètre (4) de mesure de la pression de référence, est inséré dans le tube (1), un dispositif de mesure servant à déterminer la densité (r) du milieu est disposé dans le milieu en écoulement, et le manomètre (4) de mesure de la pression différentielle et le dispositif de mesure servant à déterminer la densité (r) du milieu étant reliés à une unité d'évaluation (7) servant à déterminer le débit massique (M) de manière connue à partir de la pression différentielle (Δp) et de la densité (r) du milieu, caractérisé par le fait que le dispositif de mesure servant à déterminer la densité (r) du milieu est disposé dans ou sur le dispositif d'étranglement dans la partie à section transversale réduite et constante par rapport à celle du tube (1).

2. Dispositif suivant la revendication 1, caractérisé par le fait que le dispositif de mesure servant à déterminer la densité (r) est un condensateur (5), qui est relié à un appareil (6) de mesure de la capacité.

3. Dispositif suivant la revendication 2, caractérisé par le fait que le condensateur (5) est recou-vert d'un matériau isolant.